# EUROPEAN PATENT APPLICATION

(11) **EP 1 324 245 A1**
(43) Date of publication of application: **02.07.2003**
(21) Application number: 01983411.8
(22) Date of filing: 01.08.2001
(51) Int. Cl.: G06F 17/60

(54) **METHOD AND SYSTEM FOR TRANSFERRING CIPHER REAL RIGHT**

(30) Priority: 02.08.2000 CN 00120838
(71) Applicant: Shao, Tong, Jiangsu Province 210014 (CN)
(72) Inventor: Shao, Tong, Jiangsu Province 210014 (CN)
(74) Representative: Cooper, John
(86) International application number: CN0101216
(87) International publication number: WO02023413

(57) **Abstract**

The present invention relates to a method and system for transferring property right from a property-right-transferor to a property-right-transferee. A property-right-changer makes a digital signature for the digital secrets of the property-right-transferor and the information related to the property right to be transferred, or makes a digital signature for the digital secrets of both the property-right-transferor and the property-right-transferee and the information related to the property right to be transferred, and generates a encoded-property-right which is then provided to the property-right-transferee. After verifying, the property-right-transferee provides a consideration to the property-right-transferor. Then, the property-right-transferor discloses his secrets to the property-right-transferee. The property-right-transferee submits the encoded-property-right to the property-right-changer and discloses all the secrets included in the encoded-property-right. Then, after verifying, the property-right-changer shall transfer the property right to the property-right-transferee.

## Description

### Field of the Invention

The present invention relates to a method for transferring a property right and a system using the method; and more particular, to a method and a system for transferring a property right, which is capable to ensure a safe transaction between a property-right-transferor and a property-right-transferee.

### Background of the Invention

In recent years, with the rapid development of Internet technology, E-commerce, as a completely new commercial operation mode that will bring more business opportunities, has gained prevalent attention and been actively attempted. However, many people are worrying about the security of Internet-based transactions. For instance, in a typical B2B case, a manufacturer releases the demand for quantity, quality standard and delivery time of some fittings through Internet, and then a lot of suppliers will compete to quote in quality and price via Internet. In this way, the manufacturer can reduce purchase costs and increase the competitiveness thereof. At the same time, the manufacturer has to take some risks, because in order to guarantee the security, the supplier often requires the delivery after payment. In this case, if the quality, quantity or delivery time does not satisfy the requirements, the production plan of the manufacturer will be influenced, and as the payment has been executed, it is hard for the manufacturer to redeem the loss. Therefore, a system to guarantee the security is needed for both parties. That would be a key issue for E-commerce to exist and develop along as a new business operation mode.

In order to solve above problem, in the Chinese Patent Application No. 00106215.8 submitted on April 21, 2000, the applicant proposed "Twice-Password Payment System" which guarantees the security for both a payer and a payee. In the system, a payer shall send the primary password to a payee, and the payee shall disclose the password and the account number thereof to a bank. Alternatively, the payee may provide the account number thereof to the payer and the payer shall send the primary payment password and the account number of the payee directly to the bank. When the verification means of the bank confirms the password and provides an evidence showing that the payer has got the substantial capital within the account thereof, the primary withholding means will withhold the capital of the payer and guarantee that the capital will be paid only to the account of the payee; meanwhile, the bank will make a digital signature for above payment promise and notify the payee. After receiving the payment promise from the bank, the payee will provide goods or services to the payer. Then the payer would send the secondary payment password to the bank, or provide the password to the payee and then to the bank. When the password verification means of the bank confirms it as the secondary one of the primary password, the secondary payment means will transfer the withholding capital to the account of the payee, thus, the transaction will be completed safely.

With this system, on one hand, the payee can' t swindle money with unqualified goods or services; if so, he can' t get the secondary password, and accordingly can' t get the payment; on the other hand, the payer can' t swindle goods or services with the primary password and then refuse to provide the secondary password for the actual payment, because the payee can obtain legal protection through presenting the transaction certificates of providing goods or services; moreover, with the capital promised by the bank, the payer can' t swindle through bankruptcy.

Obviously, above system and method based on the idea of "twice-payment" improves the transaction security. However, the existent problem is that, due to the central status of the bank, the security can be guaranteed only when the bank is fair and reliable to both parties. To be concrete, it is the bank that receives and verifies two passwords and determines whether the capital shall be transferred, but if the bank colluded with one party to cheat the other, or the bank staff embezzled the payment passwords to infringe upon the benefits of both parties, the transaction security would be challenged. Due to the possibility of the false pretences thereof, the bank has to take the risks of legal disputes when using the system. Therefore, it is very important to prevent the bank, as an intermediator, from swindling and make the bank a neutral spectator in the transaction.

In the embodiment described in the Chinese Patent Application No. 00106215.8, it is a bank, as an intermediator of both parties, that keeps the capital of a payer and transfers it to a payee under a certain condition. But the applicant points out that the intermediator is not limited to banks, and it may be any wharf or storehouse keeping the goods, and the likewise. The applicant believes that each of all kinds of transaction activities can be considered as a property right transferring processes. Specifically, supposing that Party A possesses a property right which may be capital or materials, and that the property keeper is a bank or a wharf / storehouse, the transaction process shall be that Party A transfers the property right thereof to Party B for Party B' s consideration (equivalent), such as goods or services. In this case, Party A should be a property-right-transferor, and Party B should be a property-right-transferee, while the bank or wharf / storehouse, as an intermediator, should be a property-right-changer, responsible for transferring the property right to a property-right-transferee.

### Objective of the Invention

The objective of present invention is to provide an improved method for transferring a property right and a system using the method, which will guarantee the property right security of a property-right-transferor when it has not got a consideration from a property-right-transferee, ensure that the transferee can get the property right from the transferor after providing a consideration, and prevent the false pretences of an intermediator so as to maintain a neutral spectator status of the property-right-changer. Above all, it is necessary to explain the expression of a property right in present invention: a property right is irreproducible, i.e., only the owner can exercise the property right. For example, if we have the property right of a house, we have a realty certificate; when we need to show the property right, we may present the realty certificate. On Internet, the uniqueness of a property right must be expressed with a password. In above Chinese Patent Application No. 00106215.8, titled "Twice-Password Payment System" , a property owner shows the property right thereof by providing the primary and secondary payment passwords. As a property-right-changer (the bank, in the application, responsible for verifying the password) may have got the two passwords, it is possible for the property-right-changer to embezzle the passwords for swindling.

In order to resolve above problem, the applicant employs the **zero-knowledge-proof technology** in the information security field to the expression of an encoded-property-right. Specifically, a property owner can make a digital secret including a string of numbers concealing a secret inside by using a digital secret generating means, and the property owner can provide an evidence showing that he knows the secret without disclosing it, which is the so-called "**zero-knowledge-proof**" method. The means and method generating digital secrets is well known in the field of information security. According to the inventive conception of present invention, a property-right-changer shall make a digital signature for the digital secrets of a property owner and other information related to a property right, such as nature and quantity, thereby, obtains an encoded-property-right. The encoded-property-right means to indicate the ownership over a valued object with a password, and the property-right-changer can transfer the property right only to the one who knows the secrets included in the encoded-property-right. In this case, only the property owner can execute the property right transferring, because only he has got all the secrets included in the encoded-property-right. As the property-right-changer doesn' t know the secrets, he can' t swindle. Of course, if the property owner discloses the secrets to someone else, then the one who knows the secrets can ask the property-right-changer to execute the mentioned encoded-property-right transferring.

### Summary of the Invention

According to one aspect of present invention, it provides a method for transferring an encoded-property-right from a property-right-transferor to a property-right-transferee, including the following steps:
S1. a property-right-changer, via a communication means 1a, receives the digital secrets generated by a digital secret generating means 2c and the information related to a property right to be transferred provided by a property-right-transferor via a communication means 2a; or receives the digital secrets generated respectively by a digital secret generating means 2c and a digital secret generating means 3c, provided by a property-right-transferor and a property-right-transferee respectively via a communication means 2a and a communication means 3a, and the information related to a property to be transferred provided by the property-right-transferor via the communication means 2a;
S2. the property-right-changer makes a digital signature for the digital secrets and the related information by using a digital signature means 1d, and the information included in the digital signature is called an encoded-property-right;
S3. the property-right-changer provides the encoded-property-right to the property-right-transferee;
S4. the property-right-transferee verifies the encoded-property-right by using a digital signature verification means 3b;
S5. the property-right-transferee provides a consideration to the property-right-transferor;
S6. the property-right-transferor discloses the digital secrets to the property-right-transferee;
S7. the property-right-transferee submits the encoded-property-right to the property-right-changer via the communication means 3a, or specifies the encoded-property-right to the property-right-changer;
S8. the property-right-changer verifies the encoded-property-right submitted or specified by the property-right-transferee by using a digital signature verification means le, and executes the property right transferring by using a property right execution means 1c when the property-right-transferee discloses all digital secrets included in the encoded-property-right.

According to another aspect of present invention, it also provides a system to transfer an encoded-property-right from a property-right-transferor to a property-right-transferee. The property-right-transferor shall be equipped with a communication means 2a and a digital secret generating means 2c to generate the digital secrets of the property-right-transferor. The property-right-transferee shall be equipped with a communication means 3a, a digital secret generating means 3c to generate the digital secrets of the property-right-transferee, and a digital signature verification means 3b. The property-right-changer shall be equipped with a communication means 1a; a digital signature means 1d to make a digital signature for digital secrets and the information related to a property right to be transferred, received via the communication means 1a, provided by the property-right-transferor via the communication means 2a, or to make a digital signature for the digital secrets provided by the property-right-transferor and the property-right-transferee respectively via the communication means 2a and the communication means 3a and the information related to the property right to be transferred provided by the property-right-transferor via the communication means 2a, and then to generate an encoded-property-right, which will be provided to the property-right-transferee via the communication 1a; a digital signature verification means le, to verify whether the encoded-property-right received via the communication means 1a and provided via the communication means 3a of the property-right-transferee or specified by the property-right-transferee is the one digitally signed by the digital signature means 1d of the property-right-changer when the property-right-transferee asks to execute an encoded-property-right transferring; and a property right execution means 1c, by which the property-right-changer will transfer the property right to the property-right-transferee when the digital signature verification means 1e of the property-right-changer confirms that the encoded-property-right submitted or specified by the property-right-transferee is the one digitally signed by the digital signature means 1d of the property-right-changer and has included all the digital secrets; hereinto, the digital signature verification means 3b of the property-right-transferee is used to verify the encoded-property-right signed by the digital signature means 1d of the property-right-changer, and the digital secrets of the property-right-transferor is provided to the property-right-transferee by the property-right-transferor via the communication means 2a under the condition that the digital signature verification means 3b of the property-right-transferee has verified the encoded-property-right and that the property-right-transferor has got a consideration from the property-right-transferee.

The above-mentioned digital secrets may be a plurality of digital secrets, which can be separately employed in the different phases of a contract execution, thus, both parties of the contract will have legal evidences for all the phases.

Preferably, the digital secret generated by the digital secret generating means 2c of the property-right-transferor is obtained in the following way: the property-right-transferor operates a computer, namely, the digital secret generating means 2c, to generate two strong prime numbers p, and q_{1,} then gets M₁= p₁*q_{1,} and M₁ is the digital secret of the property-right-transferor. The digital secret generated by the digital secret generating means 3c of the property-right-transferee is obtained in this way: the property-right-transferee operates a computer, namely, the digital secret generating means 3c, to generate two strong prime numbers p₂ and q₂, then gets M₂= p₂*q₂, and M₂ is the digital secret of the property-right-transferee.

### Advantageous Effects

The technical solution of this invention has the following advantages:
1. Only a property owner can provide an evidence showing that he knows the secrets included in the encoded-property-right and he himself owns the property right;
2. Anyone else, including a property-right-changer, can' t provide an evidence showing that he owns the property right;
3. It is unnecessary for the property-right-changer to verify the real identity of the property owner when executing the transferring. Once the property owner shows that he has got all the secrets included in the encoded-property-right, the property-right-changer shall execute the property right transferring;
4. When there are any disputes raised, the property-right-changer can provide an evidence showing the rationality of the execution thereof through disclosing the secrets.

### Brief Description of the Drawings

The features and advantages of present invention will become more apparent from the following description of preferred embodiments given in conjunction with the accompanying drawings.
Fig. 1 is a block diagram of a system for transferring an encoded-property-right based on the first, second and fourth embodiments of the invention;
Fig. 2 is a block diagram of an improved system shown in Fig. 1;
Fig. 3 is a block diagram of a system for transferring an encoded-property-right based on the third embodiment of the invention;
Fig. 4 is a block diagram of an improved system shown in Fig. 3;
Fig. 5 is a process chart of a method for transferring an encoded-property-right based on the first, second and fourth embodiments of the invention;
Fig. 6 is a process chart of an improved method shown in Fig. 5;
Fig. 7 is a process chart of a method for transferring an encoded-property-right based on the third embodiment of the invention;
Fig. 8 is a process chart of an improved method shown in Fig. 7.

### Detailed Descriptions of the Invention

### The 1^{st} Embodiment

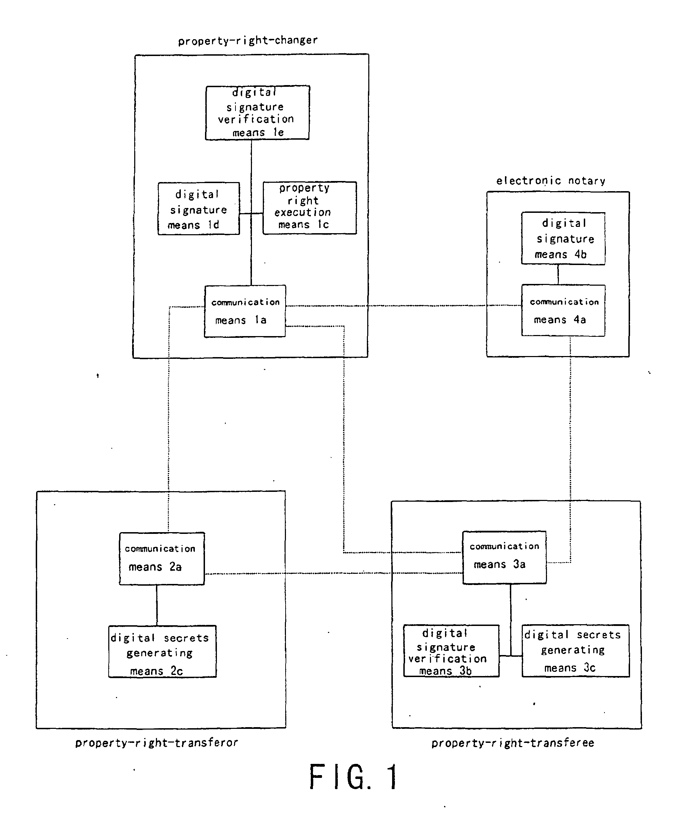

Fig. 1 shows a system for transferring an encoded-property-right based on the first embodiment of the invention. The system includes means belonging to four parties which are a property-right-transferor, a property-right-transferee, a property-right-changer, and an electronic notary. As stated, the property-right-transferor refers to the one who hopes to transfer the property right thereof to the property-right-transferee and get a consideration from the property-right-transferee. Accordingly, the property-right-transferee refers to the one who hopes to obtain the property right transferred by the property-right-transferor through providing the consideration. The property-right-changer refers to the one from whom the property-right-transferee can get the property right ultimately; the property-right-changer can be considered as a property right keeper. Where the property right object is capital, the property-right-changer is a bank; where the property right object is material, the property-right-changer may be a material keeper, such as a wharf or a storehouse, and the likewise. The property-right-changer will promise to execute the property right transferring with a digital signature when certain contracted conditions are satisfied. The electronic notary refers to the one who notarizes or digitally signs the information exchanged between the property-right-transferor and the property-right-transferee in the process of transferring the encoded-property-right.

As shown in Fig. 1, the property-right-changer, the property-right-transferor, the property-right-transferee and the electronic notary have a corresponding communication means, 1a, 2a, 3a and 4a, respectively. These communication means may be computer terminals communicated via Internet. The property-right-transferor has a digital secret generating means 2c, generating digital secrets of the property-right-transferor. The digital secret is a string of numbers including a secret, and the property-right-transferor can provide an evidence showing that he knows the secret without disclosing the secret. The digital secret generating means 2c can be realized by means of computers and by employing the digital secret generating method well known in the field of information security. For instance, the property-right-transferor operates a computer, namely, the digital secret generating means 2c, to generate two strong prime numbers p₁ and q_{1,} then gets M₁= p₁*q_{1,} and M₁ is the digital secret of the property-right-transferor. The property-right-transferee also has a like digital secret generating means 3c to generate digital secrets of the property-right-transferee. The property-right-transferee operates a computer, namely, the digital secret generating means 3c, to generate two strong prime numbers p₂ and q₂, then gets M₂= p₂*q₂, and M₂ is the digital secret of the property-right-transferee. The property-right-transferee also has a digital signature verification means 3b, verifying the digital signature of the property-right-changer. The property-right-changer has a digital signature means 1d, making digital signatures for the digital secrets, such as M₁ and/or M₂ and the information related to a property right to be transferred to generate an encoded-property-right. A digital signature means verification le of the property-right-changer is used to verify whether the encoded-property-right is the one digitally signed by the property-right-changer when the transferring of the property right is demanded. A property right execution means 1c of the property-right-changer is used to execute the property right transferring under the condition that the encoded-property-right submitted by the one who asks to execute the property right transferring is signed by the property-right-changer and that the encoded-property-right has included all the secrets, such as the strong prime numbers p₁ and q₁ composing M₁, and/ or p₂ and q₂ composing M₂. The electronic notary has a digital signature means 4b, providing digital signatures for the information exchanged between the property-right-transferor, the property-right-transferee, and the property-right-changer.

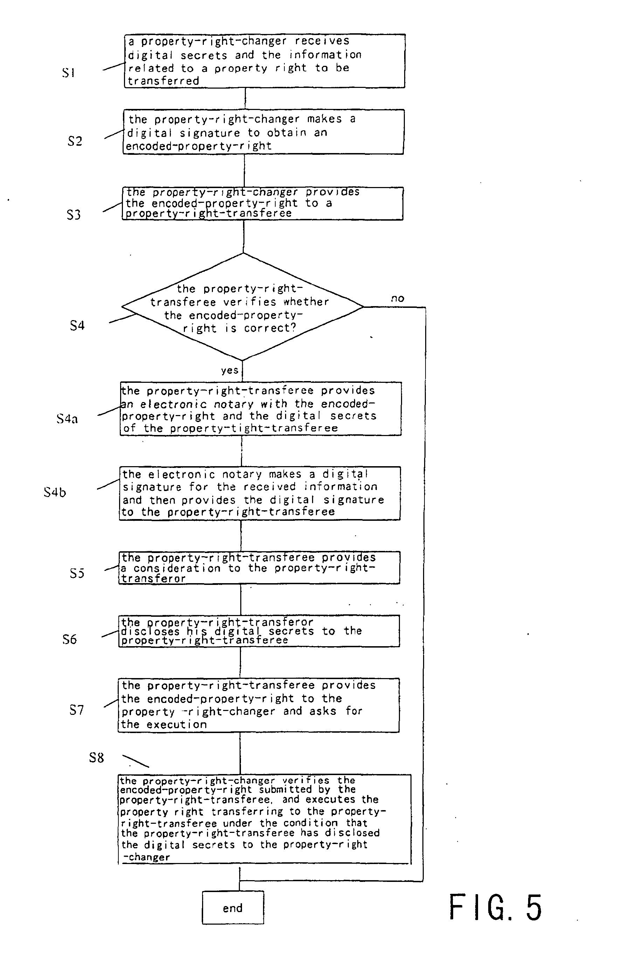

The following is the description of a method for transferring an encoded-property-right used in the system based on Fig.5.

When a property-right-transferor and a property-right-transferee agree upon property right transferring, the property-right-transferor shall first employ a digital secret generating means 2c to generate a digital secret. For instance, the property-right-transferor operates a computer, namely, the digital secret generating means 2c, to generate two strong prime numbers p₁ and q_{1,} then gets M₁= p₁*q_{1,} and M₁ is the digital secret of the property-right-transferor. In the step of S1, the property-righter-transferor, via a communication means 2a, sends the digital secret, such as M_{1,} and the information related to a property right to be transferred to the communication means 1a of a property-right-changer. The information related to the property right to be transferred includes the descriptions of the nature of the property right to be transferred, such as capital, goods, the quantity of the property right (capital amount, goods quantity) and the numbers distinguishing different kinds of property rights. In the step of S2, the property-right-changer makes the digital signature thereof by using a digital signature means 1d for the digital secrets of the property-right-transferor, such as M₁, the information related to the property right to be transferred, received via the communication means 1a, and the information of an electronic notary specified by the property-right-changer, thereby, generates an encoded-property-right. In the step of S3, the property-right-changer, via the communication means 1a, sends the signed encoded-property-right to the communication means 3a of a property-right-transferee; the property-right-changer may provide the signed encoded-property-right to the property-right-transferee in other ways. In the step of S4, after the receipt of the signed encoded-property-right from the property-right-changer, the property-right-transferee shall verify it with a digital signature verification means 3b. Where the encoded-property-right is correct, the property-right-transferee shall employ a digital secret generating means 3c to generate a digital secret. For instance, the property-right-transferee operates a computer, namely, the digital secret generating means 3c, to generate two strong prime numbers p₂ and q₂, then gets M₂= p₂*q₂, and M₂ is the digital secret of the property-right-transferee. Then in the step of S4a, the digital secrets of the property-right-transferee, such as M_{2,} and the encoded-property-right signed by the property-right-changer including the digital secrets of the property-right-transferor, such as M₁, shall be sent to the communication means 4a of an electronic notary via the communication means 3a. In the step of S4b, The electronic notary shall employ a digital signature means 4b to electronically notarize, namely, to make the digital signature thereof for the received digital secrets of the property-right-transferee, such as M_{2,} and the encoded-property-right signed by the property-right-changer including the digital secrets of the property-right-transferor, such as M₁, and then via a communication means 4a provide it to the communication means 3a of the property-right-transferee. Through the signature, the electronic notary guarantees that only the one who knows the secrets of both the property-right-transferor and the property-right-transferee should be the property right owner. In the step of S5, after receiving the digital signature from the electronic notary, the property-right-transferee shall provide a consideration to the property-right-transferor, such as goods and services, etc. In the step of S6, when receiving the consideration from the property-right-transferee with satisfactions of the contracted requirements, the property-right-transferor shall disclose the secrets to the property-right-transferee via the communication means 2a, such as the strong prime numbers p₁ and q₁ composing M₁; the property-right-transferor may disclose the digital secrets thereof to the property-right-transferee in other ways. In the step of S7, the property-right-transferee, via the communication means 3a, submits the encoded-property-right or specifies the encoded-property-right to the communication means 1a of the property-right-changer and asks the property-right-changer to execute the transferring. In the step of S8, the property-right-changer employs a digital signature verification means le to verify whether the encoded-property-right submitted or specified by the property-right-transferee is the one signed by the property-right-changer; if so, under the condition that the property-right-transferee has disclosed the secrets of the property-right-transferor included in the encoded-property-right, such as the strong prime numbers p₁ and q₁ composing M₁, the property-right-changer shall transfer the property right to the property-right-transferee by using a property right execution means 1c, thus, the property right transferring is completed. Hereinafter, if anyone else applies to execute the property right transferring, the property-right-changer shall provide an evidence showing that the encoded-property-right transferring has been executed with the secrets of the property-right-transferor, such as the strong prime numbers p, and q₁ composing M₁. thereby, avoids repetitious executions to a same encoded-property-right.

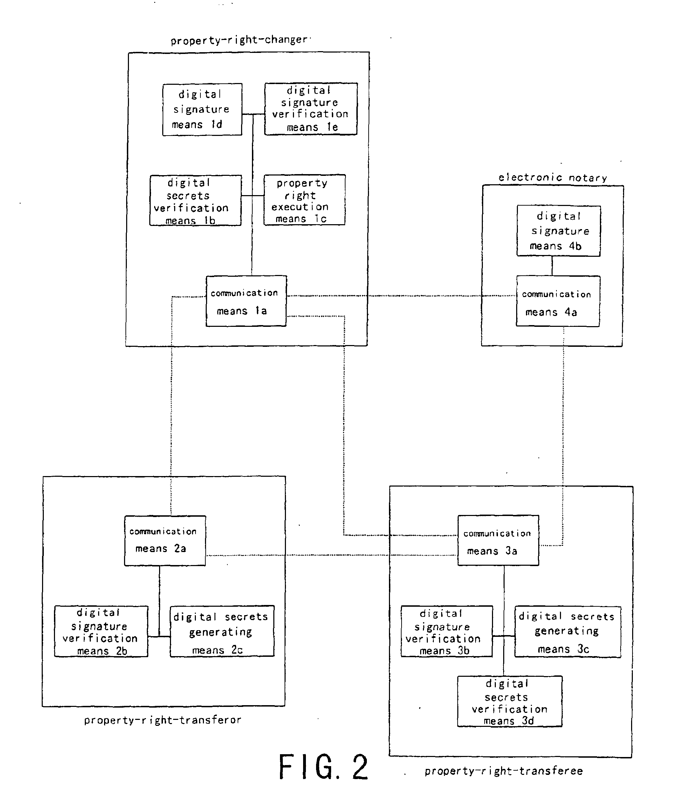

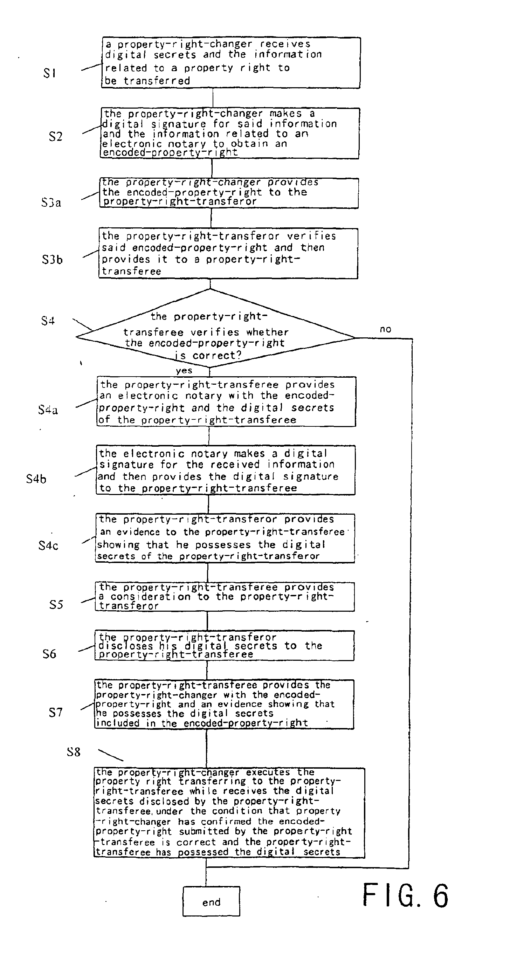

In addition, as shown in Fig. 2, in the system for transferring a property right, the property-right-transferor may also include a digital signature verification means 2b. Accordingly, as shown in Fig. 6, the above step of S3 can be replaced with the steps of S3a and S3b. That is, after the property-right-changer generates the encoded-property-right by using the digital signature means 1d in the step of S2, he will firstly, via the communication means 1a, provide the encoded-property-right to the property-right-transferor in the step of S3a; then in the step of S3b, by using the digital signature verification means 2b, the property-right-transferor shall verify the encoded-property-right signed by the property-right-changer and then send it to the property-right-transferee via the communication means 2a. Besides, as shown in Fig. 2, in the property right transferring system, the property-right-transferee may include a digital secret verification means 3d. Accordingly, as in Fig. 6, another step of S4c is added before the step of S5, that is, before providing the consideration to the property-right-transferor, the property-right-transferee shall employ the digital secret verification means 3d to verify whether the property-right-transferor has the digital secrets of the property-right-transferor. For example, the property-right-transferor provides an evidence showing that he knows the digital secrets of the property-right-transferor with the zero-knowledge-proof method or directly discloses the digital secrets, such as the strong prime numbers p₁ and q₁ composing M₁, to the property-right-transferee; and then the consideration is provided to the property-right-transferor. Moreover, in the system shown in Fig. 2, the property-right-changer may also include a digital secret verification means 1b. Accordingly, as in Fig. 6, in the above-mentioned step of S7, when submitting the encoded-property-right to the property-right-changer, the property-right-transferee shall also provide an evidence to the property-right-changer showing that he knows all the digital secrets included in the encoded-property-right. For example, the property-right-transferee, with the zero-knowledge-proof method, provides an evidence to the property-right-changer showing that he knows all the digital secrets included in the encoded-property-right or directly discloses the digital secrets to the property-right-changer, such as the strong prime numbers p₁ and q₁ composing M₁. In the step of S8, the property-right-changer, by using the digital signature verification means 1e, verifies the encoded-property-right submitted by the property-right-transferee, and confirms that the property-right-transferee knows all the digital secrets included in the encoded-property-right by using the digital secret verification means 1b and then, by using the property right execution means 1c, executes the property right transferring to the property-right-transferee while, via the communication means 1a, receiving the digital secrets disclosed by the property-right-transferee, such as the strong prime numbers p₁ and q₁ composing M₁.

The above method and system for transferring an encoded-property-right in the first embodiment of the invention can guarantee the transaction security of both the property-right-transferor and the property-right-transferee. As for the property-right-transferor, where he has not got the reasonable consideration from the property-right-transferee, he will not disclose the secrets thereof to the property-right-transferee, such as the strong prime numbers p₁ and q₁ composing M₁, and then the property-right-transferee can' t get the encoded-property-right, thus, property right security of the property-right-transferor is guaranteed. As for the property-right-transferee, he will not provide the consideration to the property-right-transferor unless he receives the notarization information signed by the electronic notary including the digital secrets of the property-right-transferee (such as M₂) and the encoded-property-right signed by the property-right-changer. What' s more, due to the legal effects of the electronic notary, where there is any transaction dispute raised, the property-right-transferee may protect the right thereof with the digital secrets of the property-right-transferee included in the information signed by the electronic notary, such as M₂. However, as the electronic notary in the system is not chosen by the property-right-transferee but specified by the property-right-changer, it is possible for the electronic notary to participate into a swindle. Therefore, the applicant puts forward the second embodiment.

### The 2^{nd} Embodiment

Fig. 1 and Fig. 5 show a method and a system for transferring an encoded-property-right based on the second embodiment of the invention. Different from the first embodiment, the electronic notary is specified or randomly selected by the property-right-transferee rather than specified by the property-right-changer. Concretely, in the step of S1 the information that the property-right-changer receives, via the communication means 1a, includes not only the digital secrets of the property-right-transferor, such as M₁, and the information of the nature, quantity and number of the property right to be transferred, but also the information related to an electronic notary specified or randomly selected by the property-right-transferee. In the step of S2, the property-right-changer makes the digital signature thereof by using the digital signature means 1d for the digital secrets of the property-right-transferor, such as M₁ and the information related to the property right to be transferred, received via the communication means 1a, thereby, generates an encoded-property-right. In this way, as the electronic notary is specified or randomly selected by the property-right-transferee, the encoded-property-right signed by the property-right-changer excludes the information related to the electronic notary. In the step of S3, the property-right-changer, via the communication means 1a, sends the signed encoded-property-right to the communication means 3a of the property-right-transferee; the property-right-changer may provide the signed encoded-property-right to the property-right-transferee in other ways. In the step of S4, after the receipt of the signed encoded-property-right from the property-right-changer, the property-right-transferee shall verify it by the digital signature verification means 3b. When the signed encoded-property-right is correct, the property-right-transferee shall employ the digital secret generating means 3c to generate a digital secret, such as M₂= p₂*q₂. In the step of S4a, the digital secrets of the property-right-transferee, such as M_{2,} and the encoded-property-right signed by the property-right-changer including the digital secrets of the property-right-transferor, such as M_{1,} shall be sent, via the communication means 3a, to the communication means 4a of the electronic notary specified or randomly selected by the property-right-transferee. In the step of S4b, the electronic notary shall employ the digital signature means 4b to make a digital signature for the received digital secrets of the property-right-transferee, such as M_{2,} and the encoded-property-right signed by the property-right-changer including the digital secrets of the property-right-transferor, such as M₁, and then via the communication means 4a provide it to the communication means 3a of the property-right-transferee. In the step of S5, after receiving the digital signature from the electronic notary, the property-right-transferee shall provide the consideration to the property-right-transferor. In the step of S6, when having received the consideration from the property-right-transferee with satisfactions of the contracted requirements, the property-right-transferorshall disclose the digital secrets to the property-right-transferee via the communication means 2a, such as the strong prime numbers p₁ and q₁ composing M₁; the property-right-transferor may disclose the digital secrets thereof to the property-right-transferee in other ways. In the step of S7, the property-right-transferee asks the property-right-changer to transfer the signed encoded-property-right. Therefore, the property-right-transferee, via the communication means 3a, submits the information notarized by the electronic notary to the communication means 1a of the property-right-changer, including the encoded-property-right signed by the property-right-changer and the digital secrets of the property-right-transferee such as M₂. In the step of S8, the property-right-changer employs the digital signature verification means le to verify whether the encoded-property-right submitted by the property-right-transferee is the one signed by himself; if so, under the condition that the property-right-transferee discloses the secrets of both the property-right-transferor and the property-right-transferee included in the encoded-property-right, such as the strong prime numbers p₁ and q₁ composing M₁, p₂ and q₂ composing M₂, the property-right-changer shall execute the property right transferring to the property-right-transferee by using the property right execution means 1c, thus, the property right transferring is completed. Hereinafter, if anyone else applies to execute the property right transferring, the property-right-changer shall provide an evidence showing that the encoded-property-right transferring has been executed with the secrets of both the property-right-transferor and the property-right-transferee, such as the strong prime numbers p₁ and q₁ composing M_{1,} p₂ and q₂ composing M₂, thereby, avoids repetitious executions to a same encoded-property-right.

In addition, being the same as the first embodiment, in the system, as shown in Fig. 2, the property-right-transferor may include the digital signature verification means 2b. Accordingly, as shown in Fig. 6, above step of S3 can be replaced with the steps of S3a and S3b. That is, after the property-right-changer generates the encoded-property-right in the step of S2, in the step of S3a he will firstly provide the property-right-transferor with the encoded-property-right that will be sent to the property-right-transferee later by the property-right-transferor. In addition, as shown in Fig. 2, the property-right-transferee may also include the digital secret verification means 3c in the system. Accordingly, as in Fig. 6, another step of S4c is added before the step of S5, that is, before providing the consideration to the property-right-transferor, the property-right-transferee shall ask the property-right-transferor to provide an evidence showing that he knows the secrets of the property-right-transferor. For example, the property-right-transferor provides an evidence showing that he knows the digital secrets of the property-right-transferor, such as strong prime numbers p, and q₁ composing M₁, with the zero-knowledge-proof method or directly discloses the same to the property-right-transferee; and then the consideration is provided to the property-right-transferor. In addition, as in Fig. 2, the property-right-changer may also include a digital secret verification means 1b in the system. Accordingly, as in the step of S7 shown in Fig. 6, when submitting the encoded-property-right to the property-right-changer, the property-right-transferee shall also provide an evidence to the property-right-changer showing that he knows all the digital secrets included in the encoded-property-right. For example, the property-right-transferee, with the zero-knowledge-proof method, provides an evidence to the property-right-changer showing that he knows all the digital secrets included in the encoded-property-right, such as strong prime numbers p₁ and q₁ composing M₁ or directly discloses the same to the property-right-transferor. In the step of S8, the property-right-changer verifies the encoded-property-right submitted by the property-right-transferee, and confirms that the property-right-transferee knows all the digital secrets included in the encoded-property-right, then executes the property right transferring to the property-right-transferee while receiving the digital secrets disclosed by the property-right-transferee, such as the strong prime numbers pi and q₁ composing M₁.

In above system for transferring an encoded-property-right based on the second embodiment of the invention, as specified or randomly selected by the property-right-transferee, the electronic notary will not swindle the property-right-transferee. Also, as selected by the property-right-transferor, the property-right-changer will not swindle the property-right-transferor. What' s more, as more than one the electronic notary can be established on Internet, the attack to some the electronic notary will not lead the whole transaction system to collapse. In the case that an electronic notary is randomly selected on Internet, he may be in geographically different regions from both parties of the transaction. Therefore, there shall be no conflicts of interests between each of both parties and the random-selected electronic notary. Comparing with a traditional notary office, above electronic notary has no chance to come into contact with the property right so that he may be considered absolutely fair.

### The 3^{rd} embodiment

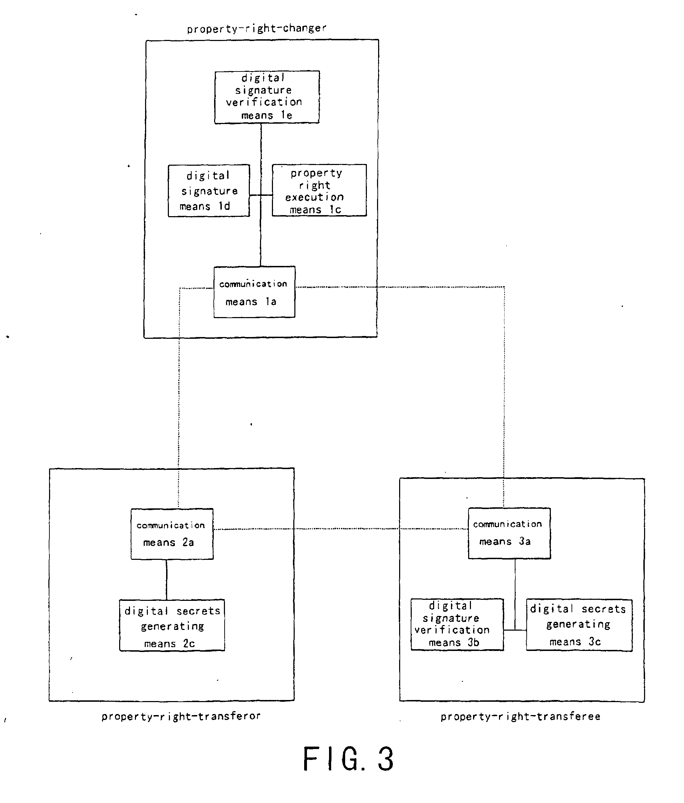

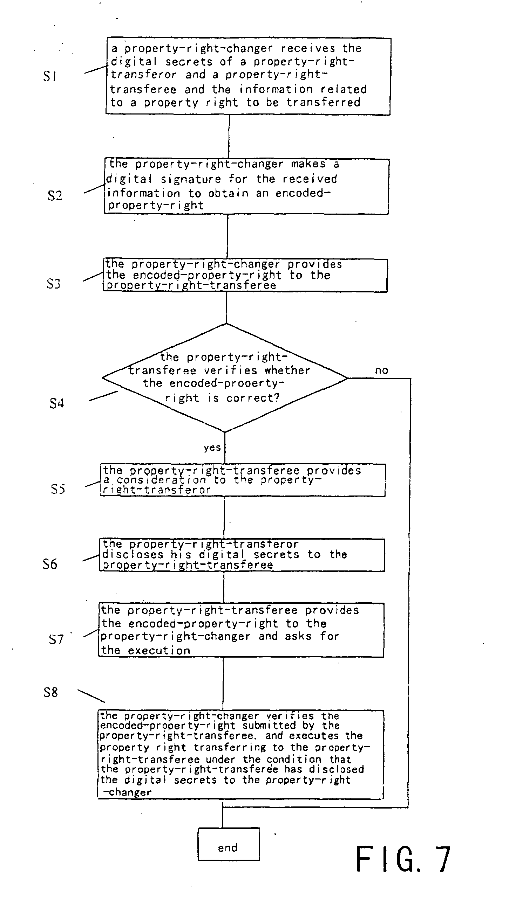

Fig. 3 shows a system for transferring an encoded-property-right based on the third embodiment of the invention. Being different from the system in Fig. 1, it excludes the means for the electronic notary part. Fig. 7 shows the property right transferring process of the system. Different from above two embodiments, the encoded-property-right signed by the property-right-changer includes the digital secrets of both the property-right-transferor and the property-right-transferee, such as M₁ and M₂, and there is no participation of the electronic notary in the process of transferring property right.

In particular, after the property-right-transferor and the property-right-transferee have agreed upon their property right transferring, both will generate a digital secret respectively by the digital secret generating means 2c and the digital secret generating means 3c. For example, the property-right-transferor operates a computer, namely, the digital secret generating means 2c, to generate two strong prime numbers p, and q_{1,} then gets M₁= p₁*q_{1,} and M₁ is the digital secret of the property-right-transferor; the property-right-transferee operates a computer, namely, the digital secret generating means 3c, to generate two strong prime numbers p₂ and q₂, then gets M₂= p₂*q₂, and M₂ is the digital secret of the property-right-transferor. In the step of S1, the property-right-changer receives, via the communication means 1a, the digital secrets, such as M₁, provided by the communication means 2a of the property-right-transferor, M₂ provided by the communication means 3a of the property-right-transferee and the information of nature, quantity, number of the property right to be transferred provided by the communication means 2a of the property-right-transferor. In the step of S2, the property-right-changer makes the digital signature thereof, by using the digital signature means 1 d, for the information received via the communication means 1a to generate an encoded-property-right which includes the digital secrets, such as M₁ and M_{2,} of both the property-right-transferor and the property-right-transferee. In the step of S3, the property-right-changer, via the communication means 1a, sends the signed encoded-property-right to the communication means 3a of the property-right-transferee. In the step of S4, after the receipt of the signed encoded-property-right from the property-right-changer, the property-right-transferee shall verify it with the digital signature verification means 3b. After the confirmation of the encoded-property-right, the property-right-transferee shall provide the consideration to the property-right-transferor in the step of S5. In the step of S6, when having received the consideration from the property-right-transferee that satisfies the requirements, the property-right-transferor shall disclose the digital secrets to the property-right-transferee via the communication means 2a, such as the strong prime numbers p₁ and q₁ composing M₁. In the step of S7, the property-right-transferee, via the communication means 3a, submits the encoded-property-right to the communication means 1a of the property-right-changer and asks the property-right-changer to execute the transferring. In the step of S8, the property-right-changer employs the digital signature verification means le to verify whether the encoded-property-right submitted by the property-right-transferee is the one signed by the property-right-changer; if so, under the condition that the property-right-transferee discloses the secrets of both the property-right-transferor and the property-right-transferee included in the encoded-property-right, such as the strong prime numbers p₁ and q₁ composing M₁, p₂ and q₂ composing M₂, the property-right-changer shall transfer the property right to the property-right-transferee by using the property right execution means 1c, thus, the property right transfer is completed. Hereinafter, if anyone else asks to execute the property right transferring, the property-right-changer shall provide an evidence showing that the encoded-property-right transferring has been executed with the secrets of both the property-right-transferor and the property-right-transferee, such as the strong prime numbers p₁ and q₁ composing M₁, p₂ and q₂ composing M₂, thereby, avoids repetitious executions to a same encoded-property-right.

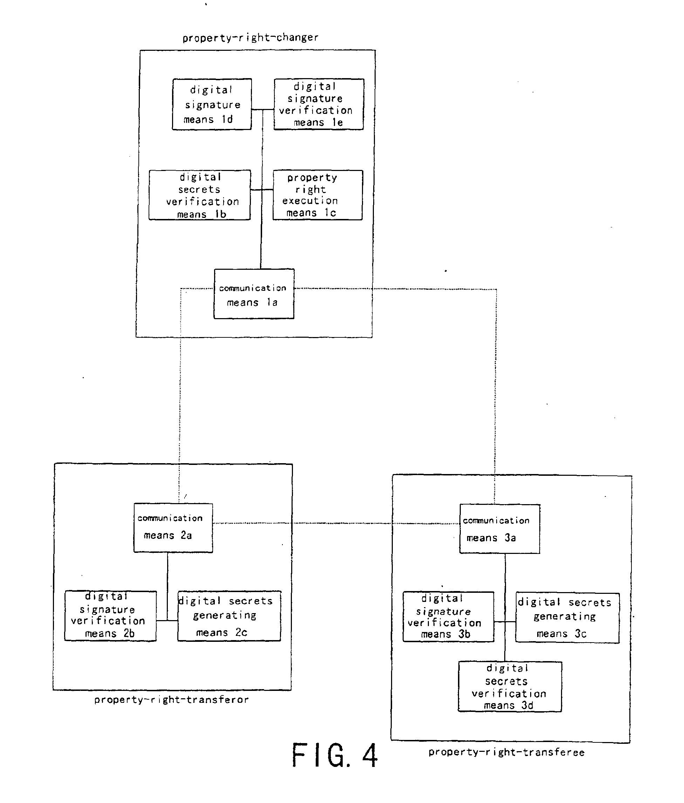

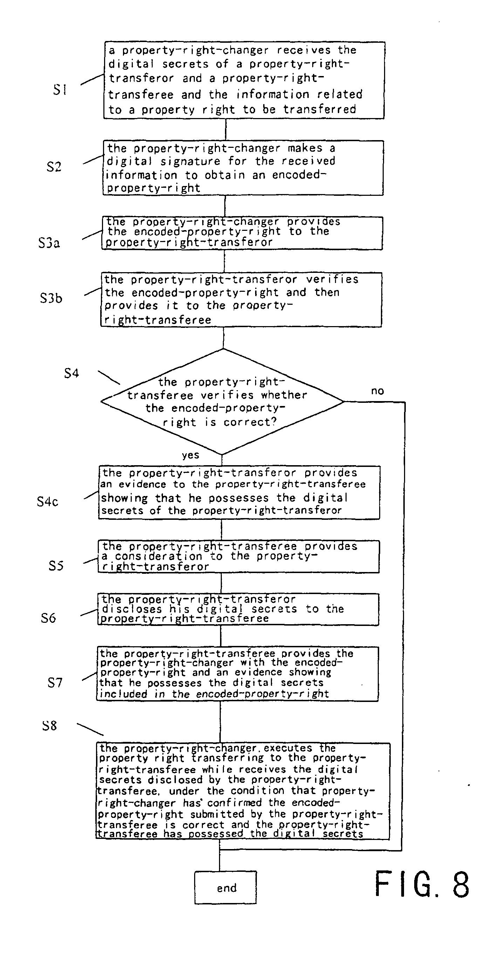

In addition, being the same as the above two embodiments, in the system, the property-right-transferor may include the digital signature verification means 2b as showed in Fig. 4. Accordingly, as shown in Fig. 8, above step of S3 can be replaced with the steps of S3a and S3b. That is, after the property-right-changer generates an encoded-property-right in the step of S2, he will, in the step of S3a, first provide the property-right-transferor with the encoded-property-right that will be sent to the property-right-transferee later by the property-right-transferor. In addition, as shown in Fig. 4, the property-right-transferee may also include the digital secret verification means 3c in the system. Accordingly, as in Fig. 8, another step of S4c is added before the step of S5, that is, before providing the consideration to the property-right-transferor, the property-right-transferee shall ask the property-right-transferor to provide an evidence showing that he knows the secrets of the property-right-transferor. For example, the property-right-transferor provides an evidence showing that he knows the digital secrets, such as the strong prime numbers p₁ and q₁ composing M_{1,} of the property-right-transferor with the zero-knowledge-proof method or directly discloses the same to the property-right-transferee; and then the consideration is provided to the property-right-transferor. In addition, as in the system shown in Fig. 2, the property-right-changer may also include the digital secret verification means 1b. Accordingly, as in the step of S7 shown in Fig. 6, when submitting the encoded-property-right to the property-right-changer, the property-right-transferee shall provide an evidence to the property-right-changer showing that he knows all the digital secrets included in the encoded-property-right. For example, the property-right-transferee, with the zero-knowledge-proof method, provides an evidence to the property-right-changer showing that he knows all the digital secrets included in the encoded-property-right, such as the strong prime numbers p₁ and q₁ composing M₁, p₂ and q₂ composing M₂ or directly discloses the same to the property-right-changer. In the step of S8, the property-right-changer verifies the encoded-property-right submitted by the property-right-transferee, confirms that the property-right-transferee knows all the digital secrets included in the encoded-property-right, and then executes the property right transferring to the property-right-transferee while receiving the digital secrets disclosed by the property-right-transferee, such as the strong prime numbers p₁ and q₁ composing M₁, p₂ and q₂ composing M₂.

In above system for transferring an encoded-property-right based on the third embodiment of the invention, the property-right-changer simultaneously signs for the digital secrets of both the property-right-transferor and the property-right-transferee, such as M₁ and M₂, to generate an encoded-property-right, that is, the property-right-changer promises to execute the transferring to the one who knows the digital secrets of both parties. The property-right-transferee will not provide the consideration to the property-right-transferor, until he has verified the information signed by the property-right-changer, which is more favorable to the security of the property-right-transferee.

### The 4^{th} Embodiment

In order to further improve the security of above method and system for transferring an encoded-property-right based on the third embodiment, the applicant puts forward the fourth embodiment. In the method and system for transferring an encoded-property-right based on the fourth embodiment, the electronic notary is involved again. Fig. 1 and Fig. 5 show the system and method. Specifically, after the property-right-transferor and the property-right-transferee have agreed upon the property right transferring, each of them will generate a digital secret respectively by the digital secret generating means 2c and the digital secret generating means 3c. For example, the property-right-transferor operates a computer, namely, the digital secret generating means 2c, to generate two strong prime numbers p₁ and q_{1,} then gets M₁= p₁*q₁, and M₁ is the digital secret of the property-right-transferor; the property-right-transferee operates a computer, namely, the digital secret generating means 3c, to generate two strong prime numbers p₂ and q₂, then gets M₂= p₂*q₂, and M₂ is the digital secret of the property-right-transferee. In the step of S1, the property-right-changer receives, via the communication means 1a, the digital secrets, such as M₁ provided by the communication means 2a of the property-right-transferor and M₂ provided by the communication means 3a of the property-right-transferee, and the information of the nature, quantity and number of the property right to be transferred provided by the communication means 2a of the property-right-transferor. What' s more, the information received via the communication means 1a by the property-right-changer also includes the information of the electronic notary specified or randomly selected by the property-right-transferee. In the step of S2, the property-right-changer makes the digital signature thereof by using the digital signature means 1d for the digital secrets of the property-right-transferor and the property-right-transferee, such as M₁ and M_{2,} and the information related to the property right to be transferred received via the communication means 1a, then generates an encoded-property-right. In this way, as the electronic notary is specified or randomly selected by the property-right-transferee, the encoded-property-right signed by the property-right-changer excludes the information of the electronic notary. In the step of S3, the property-right-changer, via the communication means 1a, sends the signed encoded-property-right to the communication means 3a of the property-right-transferee. In the step of S4, after the receipt of the signed encoded-property-right from the property-right-changer, the property-right-transferee shall verify it with the digital signature verification means 3b. In the step of S4a, after the confirmation of the signed encoded-property-right, the property-right-transferee shall send, via the communication means 3a, the encoded-property-right signed by the property-right-changer including the digital secrets of both the property-right-transferor and the property-right-transferee, such as M₁ and M₂ to the communication means 4a of the specified or random-selected the electronic notary. In the step of S4b, The electronic notary employs the digital signature means 4b to make the signature thereof for the received encoded-property-right signed by the property-right-changer including the digital secrets of both the property-right-transferor and the property-right-transferee, such as M₁ and M_{2,} and then provides it to the communication means 3a of the property-right-transferee via the communication means 4a. After receiving the digital signature from the electronic notary, the property-right-transferee provides the consideration to the property-right-transferor in the step of S5. In the step of S6, when having received the consideration from the property-right-transferee that satisfies the requirements, the property-right-transferor shall disclose the digital secrets of the property-right-transferor to the property-right-transferee via the communication means 2a, such as the strong prime numbers p₁ and q₁ composing M₁, p₂ and q₂ composing M₂. In the step of S7, the property-right-transferee, via the communication means 3a, submits the signed encoded-property-right to the communication means 1a of the property-right-changer and asks the property-right-changer to execute the transferring. In the step of S8, the property-right-changer employs the digital signature verification means le to verify whether the encoded-property-right submitted by the property-right-transferee is the one signed by the property-right-changer; if so, under the condition that the property-right-transferee discloses all the digital secrets of both the property-right-transferor and the property-right-transferee included in the encoded-property-right, such as the strong prime numbers p₁ and q₁ composing M₁, p₂ and q₂ composing M₂, the property-right-changer shall transfer the property right to the property-right-transferee via the property right execution means 1c, thus, the property right transfer is completed. Hereinafter, if anyone else asks to execute the property right transferring, the property-right-changer shall provide an evidence showing that the encoded-property-right transferring has been executed with the secrets of both the property-right-transferor and the property-right-transferee, such as the strong prime numbers p₁ and q₁ composing M₁, p₂ and q₂ composing M_{2,} thereby, avoids repetitious executions to a same encoded-property-right.

In addition, being the same as above three embodiments, in the system, the property-right-transferor may include the digital signature verification means 2b as shown in Fig. 2. Accordingly, as shown in Fig. 6, above step of S3 can be replaced with the steps of S3a and S3b. That is, after generating encoded-property-right in the step of S2, the property-right-changer will, in the step of S3a, firstly provide the property-right-transferor with the encoded-property-right that will be sent to the property-right-transferee later by the property-right-transferor. In addition, as shown in the system in Fig. 2, the property-right-transferee shall include the digital secret verification means 3c. Accordingly, as in Fig. 6, another step of S4c is added before the step of S5. That is, before providing the consideration to the property-right-transferor, the property-right-transferee shall ask the property-right-transferor to provide an evidence showing that he knows the secrets of the property-right-transferor. For example, the property-right-transferor provides an evidence showing that he knows the digital secrets of the property-right-transferor, such as the strong prime numbers p₁ and q₁ of M₁, with the zero-knowledge-proof method or directly discloses the same to the property-right-transferee, and then the consideration is provided to the property-right-transferor. In addition, as shown in the system in Fig. 2, the property-right-changer may also include the digital secret verification means 1b. Accordingly, as in Fig. 6, in the step of S7, when having submitted the encoded-property-right to the property-right-changer, the property-right-transferee shall provide an evidence to the property-right-changer showing that he knows all the digital secrets included in the encoded-property-right. For example, the property-right-transferee, with the zero-knowledge-proof method, provides an evidence to the property-right-changer showing that he knows all the digital secrets included in the encoded-property-right, such as the strong prime numbers p₁ and q₁ composing M₁, p₂ and q₂ composing M₂ or directly discloses the same to the property-right-changer. In the step of S8, the property-right-changer verifies the encoded-property-right submitted by the property-right-transferee, confirms that the property-right-transferee knows all the digital secrets included in the encoded-property-right and then executes the property right transferring to the property-right-transferee while receiving the digital secrets disclosed by the property-right-transferee, such as the strong prime numbers p₁ and q₁ composing M₁,p₂ and q₂ composing M₂.

All above has described the four preferred embodiments of the invention in detail, from which we can conclude the basic idea of the invention: in the process of transferring property right, the property-right-changer or the electronic notary guarantees that only the one who knows the secrets of both the property-right-transferor and the property-right-transferee, such as strong prime numbers p₁ and q₁ composing M₁, p₂ and q₂ composing M₂, shall be the real owner of the property right, by means of making a digital signature for the digital secrets of both the property-right-transferor and the property-right-transferee, such as M₁and M₂, and the information of the property right to be transferred, thereby, obtains the security of both parties. As for the property-right-transferor, if only he has not got the reasonable consideration from the property-right-transferee, he will not disclose the secrets thereof to the property-right-transferee, such as the strong prime numbers p₁ and q₁ composing M₁ and the property-right-transferee can' t get the encoded-property-right so that the property right security is guaranteed. As for the property-right-transferee, he will not provide the consideration to the property-right-transferor unless he has received the digital secrets of the property-right-transferee signed by the property-right-changer or the electronic notary, such as M₂. When any dispute arises from both parties, they have resort to settle down the dispute by law. For example, when the property-right-transferor is dissatisfied with the consideration provided by the property-right-transferee, thus, refuses to provide the secret thereof, the property-right-transferee can protect the right thereof with the digital secrets of the property-right-transferee, such as M₂ included in the information signed by the property-right-changer or the electronic notary. The property-right-changer is supposed to execute the property right transferring to the one who knows all the secrets included in the encoded-property-right. As the property-right-changer does not know the secrets before the property-right-transferee applies for the property right execution through disclosing the secrets, such as p₁ and q₁ composing M₁, p₂ and q₂ composing M₂, it is impossible for the property-right-changer to swindle. Therefore, it is obvious that when the encoded-property-right transferring method and system based on present invention has been employed; the property-right-changer will have no risks involving into suspicious swindle or any other legal dispute. Furthermore, according to the system and method, the duty of the property-right-changer is only to make sure that only the one who knows all the secrets included in the encoded-property-right can get the property right, and then will never be involved into the disputes caused by the swindles during the process of CA authentication nowadays. Therefore, the property-right-changer assumes little legal responsibility in the whole process.

Besides, in above four preferred embodiments of the invention, the property-right-transferor and the property-right-transferee can sign a contract to be carried out phase by phase and generate a plurality of digital secrets with respective digital secret generating means, which will be used in different phases of the transferring operation.

The property right transferring method based on the invention may be compared to a so-called "safe agreement" . Supposing that A wants to exchange jewelry for the goods of B, A won' t give the jewelry to B first and B will not give the goods to A first, either. Then they find an intermediator with a transparent safe. A puts the jewelry thereof into the safe, and locks it himself. After B checks the safe and obtains the guaranty from the intermediator, B puts the safe of A into a larger safe, locks it up and gives it to the intermediator. Then, B gives the goods thereof to A. After A checks and confirms the goods, he gives the key thereof to B. Now B can open the safe with the keys of both A and himself and takes away the jewelry or the consideration. In fact, the intermediator is only a keeper of the safe; he can' t take away the jewelry or collude with any of the parties to swindle. The only function of the intermediator is to guarantee that anyone who has the keys of both parties can have the jewelry in the safe. In this case, once there are any disputes, it can be submitted to the court and the intermediator shall give the safe to the winning party. The most prominent feature of the method is that the intermediator has got only one duty of keeping the safe so that he assumes little responsibility when any dispute arises.

To sum up, the system and method for transferring an encoded-property-right transferring of present invention can greatly improve the security of Internet-based E-commerce activities. Meanwhile, enlightened by the invention, we can improve the present bank payment systems.

In particular, on the basis of the invention, we can put forward a twice-payment method used by a bank. When a bank client and an enterprise have reached a transaction agreement, the bank client shall first fill out the check only for account thereof, stamp and submit it to the bank. After verifying the stamp, the bank shall issue a bill with the stamp of the bank, which includes the digital secrets of both the bank client and the enterprise and guarantees that the bank will pay the bill by means of making a digital signature, and the amount of the bill should be the same as that of the check only for account of the bank client. The bank gives the bill to the bank client, and then deduct corresponding amount from the account of the bank client. The bank client gives the bill to the enterprise asking for the corresponding consideration. The enterprise shall confirm that the bank has signed the bill for the digital secrets of the enterprise and asks the one providing the bank bill to present an evidence showing that he knows the digital secrets of the bank client before providing the corresponding consideration. When the bank client has confirmed that the goods provided by the enterprise are satisfied with the requirements, he shall provide the secrets thereof to the enterprise. Then the enterprise sends the bank bill and the digital secrets of both the bank client and himself to the bank. After verifying the stamp (digital signature), that is, verifying the authenticity of the bank bill, receiving the two digital secrets and confirming that the enterprise knows the two digital secrets, the bank shall make a payment to the enterprise. When there is any dispute raised, the bank shall show that it has got two digital secrets, which is the evidence that the check has been paid. According to above twice-payment method, purchaser (the bank client) and provider (the enterpriser) can agree upon a quality-inspection period. The bank client will pay the enterpriser after the quality-inspection period. Therefore, the legal rights and interests of both parties are protected.

## Claims

1. A method for transferring an encoded-property-right from a a property-right transferor to a property-right-transferee, including the following steps:
S1. A property-right-changer, via a communication means, receives the digital secrets generated by a digital secret generating means and the information related to the property right to be transferred that are provided by said property-right-transferor via another communication means; or receives the digital secrets generated respectively by both said digital secret generating means of said property-right-transferor and said property-right-transferee and provided by said property-right-transferor and said property-right-transferee via respective communication means thereof, and the information related to the property to be transferred that is provided by said property-right-transferor via a communication means;
S2. said property-right-changer makes a digital signature for said information by means of a digital signature means, thereby obtains a "encoded-property-right" ;
S3. said property-right-changer provides said encoded-property-right to said property-right-transferee;
S4. said property-right-transferee verifies said encoded-property-right by means of a digital signature verification means;
S5. said property-right-transferee provides a consideration to said property-right-transferor;
S6. said property-right-transferor discloses his digital secrets to said property-right-transferee;
S7. said property-right-transferee submits said encoded-property-right to said property-right-changer via a communication means, or assigns said encoded-property-right to said property-right-changer;
S8. said property-right-changer verifies said encoded-property-right submitted or assigned by said property-right-transferee by means of said digital signature verification means, and executes the property right transferring by means of a property right execution means if said property-right-transferee discloses all digital secrets included in said encoded-property-right.

2. A method according to claim 1, wherein,
said information related to said property right to be transferred includes nature of said property right, quantity of said property right and numbers representing different kinds of property rights.

3. A method according to claim 2, wherein,
the nature of said property right is capital, the quantity of said property right is the amount of the capital and said property-right-changer of said property right is a bank.

4. A method according to claim 2, wherein,
the nature of said property right is goods, the quantity of said property right is the quantity of the goods and said property-right-changer of said property right is a storehouse or a wharf.

5. A method according to claim 1, wherein,
Said digital secrets that said property-right-changer receives via a communication means in the step of S1 and signed by means of said digital signature means in the step of S2 only include the digital secrets of said property-right-transferor.

6. A method according to claim 5, wherein,
in the step of S2, said information signed by said digital signature means of said property-right-changer also includes the information related to a electronic notary specified by said property-right-changer;
the method further includes the following steps between the steps of S4 and S5:
S4a. said property-right-transferee, via a communication means, provides said electronic notary with said encoded-property-right and said digital secrets of said property-right-transferee;
S4b. said electronic notary, by means of said digital signature means, makes a digital signature for said encoded-property-right and said digital secrets of said property-right-transferee, and then provides said digital signature to said property-right-transferee via a communication means;
In the step of S8, said property-right-transferee shall disclose said digital secrets of said property-right-transferor to said property-right-changer.

7. A method according to claim 5, wherein,
in the step of S1, via a communication means, said property-right-changer also receives said information related to electronic notary specified or selected randomly by said property-right-transferee;
the method further includes the following steps between the steps of S4 and S5:
S4a. said property-right-transferee, via a communication means, provides said electronic notary with said encoded-property-right and the digital secrets of said property-right-transferee;
S4b. said electronic notary, by means of said digital signature means, makes a digital signature for said encoded-property-right and the digital secrets of said property-right-transferee, and then provides the digital signature to said property-right-transferee via a communication means;
in the step of S8, said property-right-transferee shall disclose the digital secrets of both said property-right-transferor and said property-right-transferee to said property-right-changer.

8. A method according to claim 1, wherein,
said digital secrets that said property-right-changer receives via a communication means in the step of S 1 and is signed by said digital signature means include the digital secrets of both said property-right-transferor and said property-right-transferee:
in the step of S8, said property-right-transferee shall disclose said digital secrets of both said property-right-transferor and said property-right-transferee to said property-right-changer.

9. A method according to claim 8, wherein,
in the step of S1, said property-right-changer also receives, via a communication means, the information related to said electronic notary specified or selected randomly by said property-right-transferee;
the method further includes the following steps between the steps of S4 and S5:
S4a. said property-right-transferee, via a communication means, provides said electronic notary with said encoded-property-right and digital secrets of said property-right-transferee;
S4b. said electronic notary, by means of said digital signature means, makes a digital signature for said encoded-property-right signed by said property-right-changer and said digital secrets of said property-right-transferee, and then provides said digital signature to said property-right-transferee via a communication means.

10. A method according to any one of claims 1-9, wherein,
in the step of S3, firstly, said property-right-changer, via a communication means, provides said encoded-property-right to said property-right-transferor, and then said property-right-transferor provides the same to said property-right-transferee via a communication means.

11. A method according to any one of claims 1-10, wherein,
before the step S5, the method further includes following step:
S4c. said property-right-transferor provides evidence to said property-right-transferee showing that he posses said digital secrets of said property-right-transferor.

12. A method according to any one of claims 1-11, wherein,
in the step of S7, on submitting said encoded-property-right to said property-right-changer, said property-right-transferee should further provide an evidence to said property-right-changer showing that he posses all the digital secrets included in said encoded-property-right.
in the step of S8, said property-right-changer, by means of said digital signature verification means, verifies said encoded-property-right submitted by said property-right-transferee, and confirms that said property-right-transferee posses all the digital secrets included in said encoded-property-right by means of a digital secret verification means and then, by means of said property right execution means, executes the property right transferring to said property-right-transferee while receives said digital secrets disclosed by said property-right-transferee via a communication means.

13. A method according to any one of claims 1-12, wherein,
said digital secrets of both said property-right-transferor and said property-right-transferee generated by respective said digital secret generating means thereof are a plurality of digital secrets, which can be respectively used in different phases of the contract signed by said property-right transferor and property-right-transferee.

14. A method according to any one of claims 1-13, wherein,
said digital secret generated by said digital secret generating means of said property-right-transferor is obtained in this way: a computer is operated by said property-right-transferor to generate two strong prime numbers p₁ and q_{1,} then M₁= p₁*q₁ is obtained, wherein M₁ is said digital secret of said property-right-transferor; and
said digital secret generated by said digital secret generating means of said property-right-transferee is obtained in this way: a computer is operated by said property-right-transferee to generate two strong prime numbers p₂ and q₂, then M₂= p₂*q₂ is obtained, wherein M₂ is said digital secret of said property-right-transferee.

15. A method according to any one of claims 1-14, wherein,
all said communication means are connected with each other via a communication network.

16. A method according to claim 15, wherein,
said communication network is Internet and said communication means are computer terminals.

17. A system for transferring encoded-property-right from property-right transferor to property-right-transferee, said system includes:
a communication means (2a) at said property-right-transferor;
a digital secret generating means (2c) at said property-right-transferor, for generating the digital secrets of said property-right-transferor;
a communication means (3a) at said property-right-transferee;
a digital secret generating means (3c) at said property-right-transferee, for generating the digital secrets of said property-right-transferee;
a digital signature verification means (3b) at said property-right-transferee;
a communication means (1a) at said property-right-changer;
a digital signature means (1d) at said property-right-changer, for making a digital signature for said digital secrets of said property-right-transferor and the information related to the property right to be transferred, which are provided by a communication means (2a) and received by a communication means (1a), or making a digital signature for said digital secrets of both said property-right-transferor and said property-right-transferee which are provided respectively by said communication means (2a) and said communication means (3a), and the information related to the property right to be transferred which is provided by said communication means (2a), thereby, generating a encoded-property-right and providing the same to said property-right-transferee via said communication means (1a);
said digital signature verification means (le) at said property-right-changer, for verifying whether said encoded-property-right submitted by said communication means (3a) at said property-right-transferee and received by said communication means (1a) at property-right-changer is the one signed by said digital signature means (1d) at said property-right-changer, when said property-right-transferee asks to execute a encoded-property-right transferring; and
said property right execution means (1c) at said property-right-changer, for executing the property right transferring to said property-right-transferee when said digital signature verification means (le) has confirmed that said encoded-property-right submitted by said property-right-transferee is the one signed by said digital signature means (1d) at said property-right-changer and said property-right-transferee has disclosed all the digital secrets included in said encoded-property-right;
wherein, said digital signature verification means (3b) at said property-right-transferee is used to verify the encoded-property-right signed by said digital signature means (1d) at said property-right-changer; the digital secrets of said property-right-transferor are provided to said property-right-transferee by said communication means (2a) at said property-right-transferor when said digital signature verification means (3b) of said property-right-transferee has verified said encoded-property-right and a consideration has been provided to said property-right-transferor.

18. A system according to claim 17, wherein,
said the information related to the property right to be transferred includes the nature of the property right, the quantity of the property right and the numbers representing different kinds of the property rights.

19. A system according to claim 18, wherein,
the nature of said property right is capital, the quantity of said property right is the amount of the capital and said property-right-changer of said property right is a bank.

20. A system according to claim 18, wherein,
the nature of said property right is goods, the quantity of said property right is the quantity of the goods and said property-right-changer of said property right is a storehouse or a wharf.

21. A system according to claim 17, wherein,
said digital secrets that is received by said communication means (1a) and signed by said digital signature means (1d) only include said digital secrets of said property-right-transferor.

22. A system according to claim 21, wherein,
the information signed by said digital signature means (1d) at said property-right-changer further includes the information related to said electronic notary specified by said property-right-changer; the system further includes:
a communication means (4a) at said electronic notary; and
a digital signature means (4b) at said electronic notary, for making a digital signature for said encoded-property-right and said digital secrets of said property-right-transferee, which are provided by said communication means (3a) and received by said communication means (4a), thereby, providing said digital signature to said property-right-transferee by said communication means (4a),
said property-right-transferee shall disclose the digital secrets of said property-right-transferor to said property-right-changer.

23. A system according to claim 21, wherein,
the information received by said communication means (1a) at said property-right-changer further includes the information related to said electronic notary specified or selected randomly by said property-right-transferee;
the system further includes:
a communication means (4a) at said electronic notary; and
a digital signature means (4b) at said electronic notary, for making a digital signature for said encoded-property-right and digital secrets of said property-right-transferee, which are provided by said communication means (3a) and received by said communication means (4a), thereby, providing said digital signature to said property-right-transferee by said communication means (4a),
said property-right-transferee shall disclose to said property-right-changer said digital secrets of both said property-right-transferor and said property-right-transferee.

24. A system according to claim 17, wherein,
said digital secrets received by said communication means (1a) at said property-right-changer and signed by said digital signature means (1d) includes said digital secrets of both said property-right-transferor and said property-right-transferee;
said property-right-transferee discloses to said property-right-changer said digital secrets of both said property-right-transferor and said property-right-transferee.

25. A system according to claim 24, wherein,
the information received by said communication means (1a) at said property-right-changer further includes the information related to said electronic notary specified or selected randomly by said property-right-transferee;
the system further includes:
a communication means (4a) at said electronic notary; and
a digital signature means (4b) at said electronic notary, for making a digital signature for said encoded-property-right and said digital secrets of said property-right-transferee, which are provided by said communication means (3a) and received by said communication means (4a), thereby, providing said digital signature to said property-right-transferee by said communication means (4a).

26. A system according to any one of claims 17-25, further includes a digital signature verification means (2b) at said property-right-transferor,
after said digital signature means (1d) at said property-right-changer has generated said encoded-property-right, said encoded-property-right is provided to said property-right-transferor by said communication means (1a) firstly, then is verified by said digital signature verification means (2b), and is provided to said property-right-transferee by said communication means (2a).

27. A system according to any one of claims 17-26, further includes:
a digital secret verification means (3d) at said property-right-transferee, for verifying whether said property-right-transferor posses said digital secrets of said property-right-transferor before said consideration is provided to said property-right-transferor.

28. A system according to any one of claims 17-27, further includes:
a digital secret verification means (1b) at said property-right-changer, for verifying whether said property-right-transferee posses all said digital secrets included in said encoded-property-right, when said digital signature verification means (le) has confirmed that said encoded-property-right submitted by said property-right-transferee is the one signed by said digital signature means (1d) at Said property-right-changer; and
said property right execution means (1c) will execute the property right transferring to Said property-right-transferee when said digital secrete verification means (1b) has confirmed said property-right-transferee posses all said digital secrets included in said encoded-property-right, while said communication means (1a) will receive said digital secrets disclosed by said property-right-transferee.

29. A system according to any one of claims 17-28, wherein,
said digital secrets of both said property-right-transferor and said property-right-transferee generated by respective said digital secret generating means thereof are a plurality of digital secrets, which can be respectively used in different phases of the contract signed by said property-right transferor and said property-right-transferee.

30. A system according to any one of claims 17-29, wherein,
said digital secret generated by said digital secret generating means at said property-right-transferor is obtained in this way: a computer is operated by said property-right-transferor to generate two strong prime numbers p₁ and q_{1,} then M₁= p₁*q₁ is obtained, wherein M₁ is the digital secret of said property-right-transferor; and
said digital secret generated by said digital secret generating means of said property-right-transferee is obtained in this way: a computer is operated by said property-right-transferee to generate two strong prime numbers p₂ and q₂, then M₂= p₂*q₂ is obtained, wherein M₂ is the digital secret of said property-right-transferor.

31. A system according to any one of claims 17-29, wherein,
all said communication means are connected with each other via a communication network.

32. A system according to claim 31, wherein,
said communication network is Internet and said communication means are computer terminals.
